# EUROPEAN PATENT SPECIFICATION

(11) **EP 4 299 267 B1**
(45) Date of publication and mention of the grant of the patent: **23.07.2025**
(21) Application number: 22717416.6
(22) Date of filing: 17.02.2022
(51) Int. Cl.: B28B 1/00, B28B 17/00, B28C 5/16, E04G 21/04

(54) **INTELLIGENT CONSTRUCTION SYSTEM AND METHOD USING 3D PRINTING AND ADDITIVE MANUFACTURING**
INTELLIGENTES BAUSYSTEM UND VERFAHREN MIT 3D-DRUCK UND GENERATIVER FERTIGUNG
SYSTÈME ET PROCÉDÉ DE CONSTRUCTION INTELLIGENTE PAR IMPRESSION 3D ET FABRICATION ADDITIVE

(43) Date of publication of application: 03.01.2024
(73) Proprietor: Cosmos 3D Innovatech International, S.L., 46520 Puerto Sagunto (ES)
(72) Inventor: GARCIA MUÑOZ, Rubén, 46510 QUARTELL (VALENCIA) (ES)
(74) Representative: ZBM Patents - Zea, Barlocci & Markvardsen
(86) International application number: PCT/ES2022/070079
(87) International publication number: WO 2023/156686

(56) References cited:
- EP-A1- 4 000 834
- WO-A1-2013/064826
- US-A1- 2005 280 185
- US-A1- 2021 370 609
- IMPRIMERE AG BIG 3D-PRINTER: "Mobile 3D Printer", 19 February 2021 (2021-02-19), XP093006316, Retrieved from the Internet <URL:https://www.youtube.com/watch?v=HtJ5CVZtXO0&ab_channel=ImprimereAGBIG3D-Printer> [retrieved on 20221208]

## Description

### Technical field

The presented invention relates to a system for intelligent 3D printing and additive manufacturing using a variety of cementitious materials and has the purpose of reproducing 3D models previously designed as a CAD model.

### Prior art

In terms of the state-of-the-art, several manufacturers of 3D printing-based building systems are known such as ICON Technology, Inc.; COBOD International A/S; and Yingchuang Building Technique Co. Ltd (WINSUN).

For example, document WO2020180323A1 thusly describes construction systems for building a structure on a base and methods related thereto. In one embodiment, the construction system includes a rail assembly configured to mount to the base. Furthermore, the construction system includes a mobile gantry on the rail assembly, configured to move along an initial axis with respect to the rail assembly. In addition, the construction system includes a mobile printing assembly on the gantry, configured to move along a second axis relative to the gantry. The second axis is orthogonal to the initial axis. The printing assembly is configured to deposit vertically stacked layers of an extrudable build material onto the base to build the structure. The gantry width along the second axis is configured to be adjustable with respect to the base.

WO2020131119A1 relates to methods for constructing a structure and a related non-transitory computer-readable medium. In one embodiment, the method includes (a) defining an initial vertical slice and a second vertical slice of the structure. A lateral cross-section of the structure within the initial vertical section is different from the lateral cross-section of the structure for the second vertical section. Furthermore, the method includes (b) depositing multiple vertically stacked initial layers of an extrudable build material using a printing assembly to form the initial vertical slice or slice. Furthermore, the method includes depositing multiple vertically stacked second layers of the extrudable build material on top of the initial portion or vertical *slice* using the printing assembly to form the second portion or vertical *slice.*

Documents US 2021/0370609 A1, which discloses an intelligent building system in accordance with the preamble of claim 1, WO 2013/064826 A1 and US 2005/0280185 A1 are examples of apparatus for fabricating three-dimensional objects.

Compared to the aforementioned state-of-the-art, it is necessary to generate a construction system that is functional from an industrial point of view and to improve the quality of the finishes, guaranteeing modularity so that the product can be adapted to the user's needs, ensuring quality printing parameters as close as possible to construction standards. The system improves the working performance of existing technology on the market, allowing continuous 24/7 work, improves occupational safety and establishes an intelligent system based on machine vision techniques for process control and decision-making. This is achieved via the construction system that forms the subject of claim 1.

### Explanation of the invention

One object of the presented invention is an innovative construction system, based on 3D printing technology (FDM, Fused Deposition Modelling). The construction system is associated with a computer-implemented method that interprets the 3D model and prints it using a direct printing machine comprising a self-supporting structure presenting a Cartesian configuration and equipped with a printing head that deposits layers of concrete to create a three-dimensional structure in situ. This object is achieved using the 3D printing machine, the computer-implemented method and the constructive architectural design presented in the claims accompanying this specification.

For this purpose, the printing machine is configured as a structural mechanical system - with a Cartesian configuration (X-Y-Z axes) that has a continuous and modular Y axis, in such a way that it makes it possible to adapt the printing range to constructions of varying dimensions using the same printer. It also includes a system of height-adjustable, width-adjustable rails for levelling and adjusting the Cartesian structure.

The 3D printing machine is also configured for direct printing without material accumulation devices in the head or hopper. The printing machine will have a double-chamber mixing, pumping and delivery system for special cement-based or clay-based mortars, allowing the printing of special materials such as micro-cements, organic mortars mixed with recycled plastics, clay-based mortars, natural fibres and others. This pumping system must be interconnected with the printer to send and receive information to and from the PLC.

The construction system that forms the subject of the presented invention is therefore configured to achieve optimum printing quality and high productivity due to drastic reduction of construction times through 24-hour printing with no downtime and an intelligent monitoring and control system. The high construction speed of vertical structures makes it ideal for the manufacture of prefabricated structures in indoor environments with controlled environmental conditions. The construction of the structures of a 100m² house can be printed in a total time of less than 24 hours. The maximum printing speed of the construction system of the invention exceeds 1000 mm/second and is limited to 300 mm/second for safety reasons.

The feature that makes continuous 24-hour printing possible is the mirror-like duplication of the pumping system, with the pumping system and the human staff being interchanged from time to time.

Another differential factor of the invention lies in its intelligent printing system based on the implementation of machine vision and Al systems that allow process control and decision-making to be done by the system itself. It guarantees print quality autonomously and without human intervention, maintaining stable print parameters and minimising errors.

In addition, the construction system of the invention reduces the environmental impact compared to traditional or state-of-the-art construction systems. The construction system of the presented invention allows a 60% reduction in the use of materials and energy, since waste and carbon dioxide emissions into the atmosphere are reduced.

It is precisely because of all the above that the cost of printed construction is much lower than that of traditional construction. For example, the estimated cost is one-fifth that of traditional construction, also due in part to the fact that the personnel required to operate the system need not be specialists in construction, but only in the operation of the intelligent system itself, which is also simplified.

Finally, another key factor that the presented invention improves over traditional construction systems and those described in the state-of-the-art is occupational safety. The presented invention makes it possible to reduce the number of workers who perform the work; their presence may entail risks that are associated with the construction task itself and are subject to a high accident rate. The printing machine can be operated with only two or three operators who monitor the mixing, pumping and printing process, with practically no intervention in the actual construction process.

The advantages described are apparent from the claims accompanying the presented description. Throughout the description and claims, the word "comprises" and variants thereof are not intended to exclude other technical features, additives, components or steps. To those skilled in the art, other objects, advantages and features of the invention will follow in part from the invention and in part from its practice. The following examples and drawings are provided by way of illustration and are not intended to restrict the presented invention.

### Brief description of the drawings

The following is a very brief description of a series of drawings which may aid better understanding of the invention and which relate expressly to an embodiment of the said invention, which is illustrated as a non-limiting example thereof.

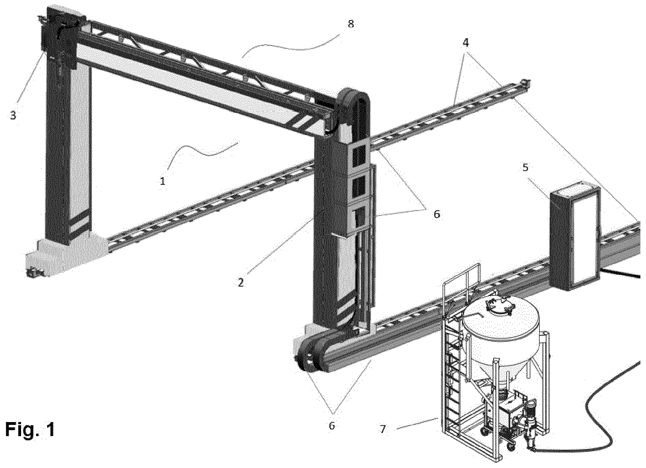

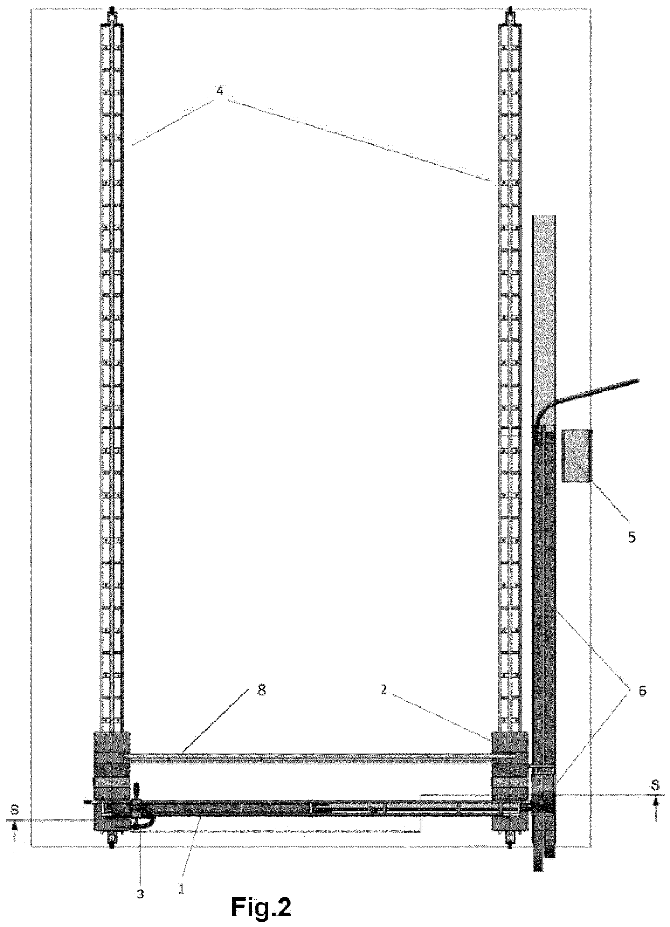

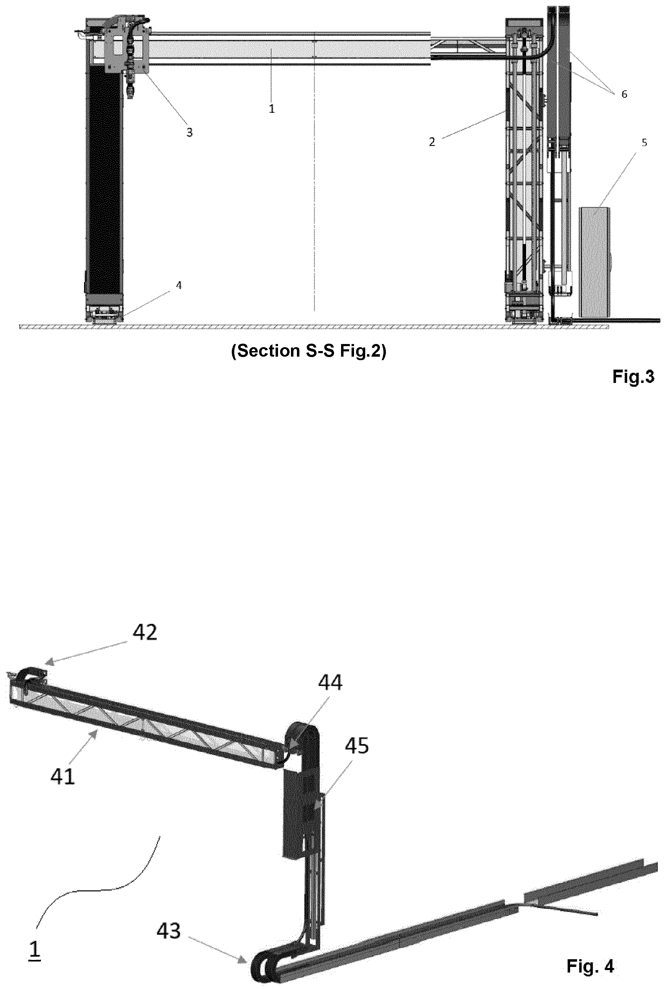

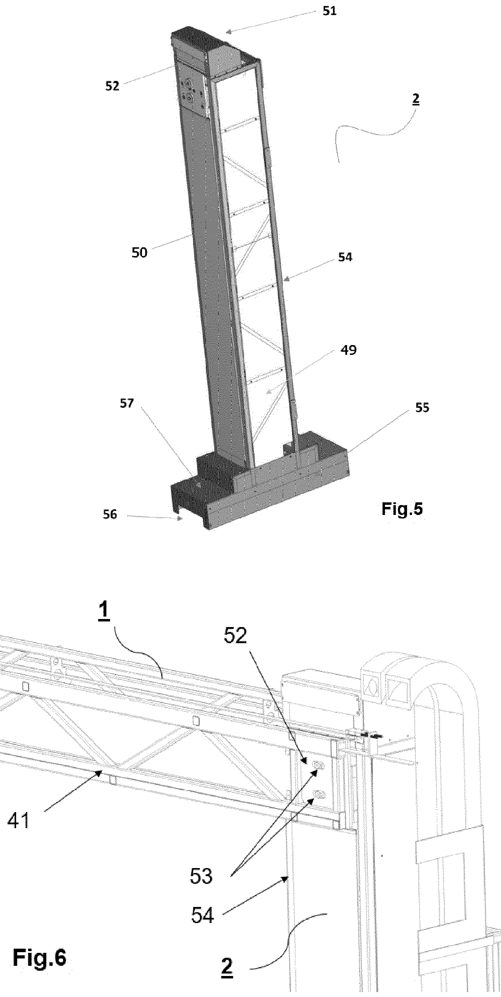

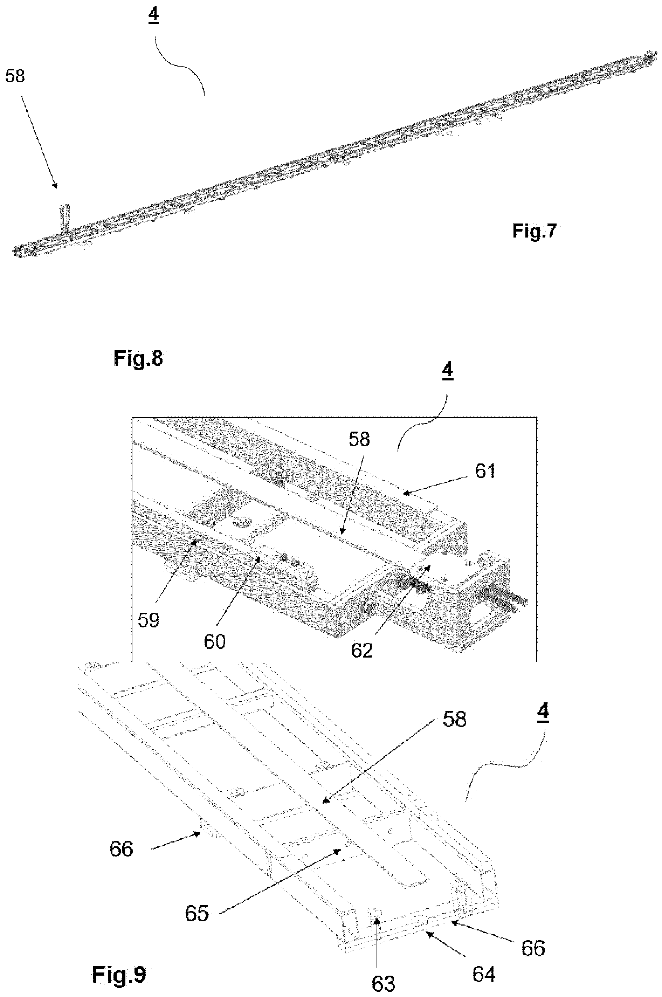

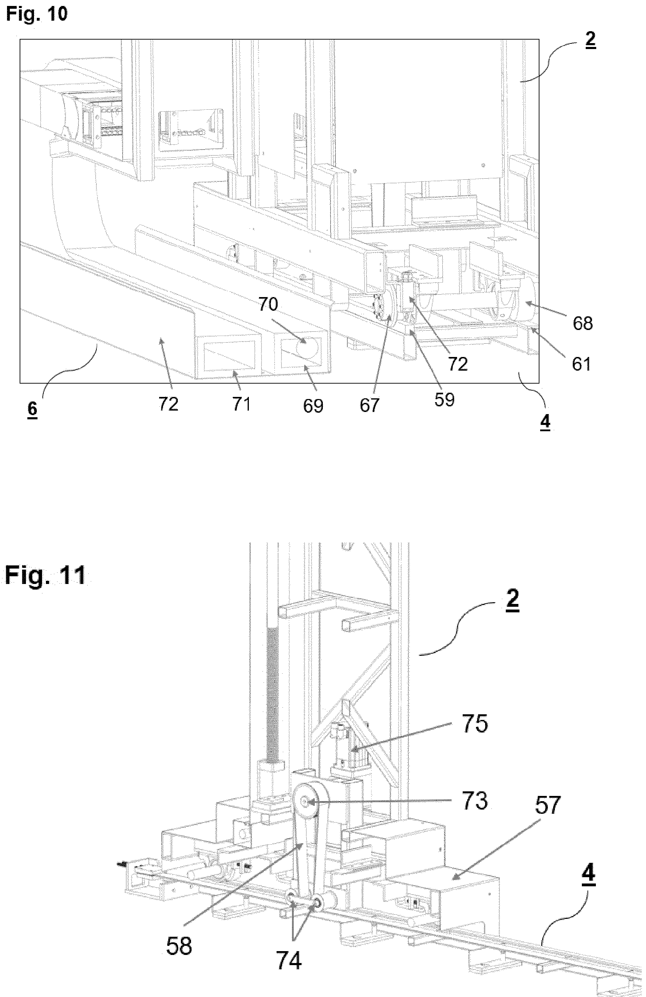

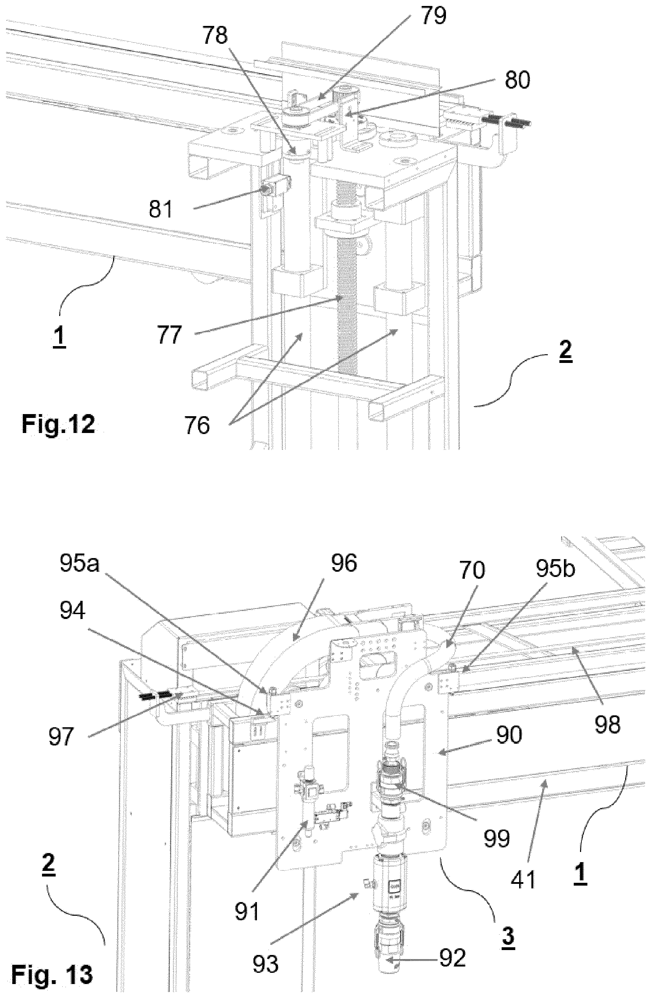

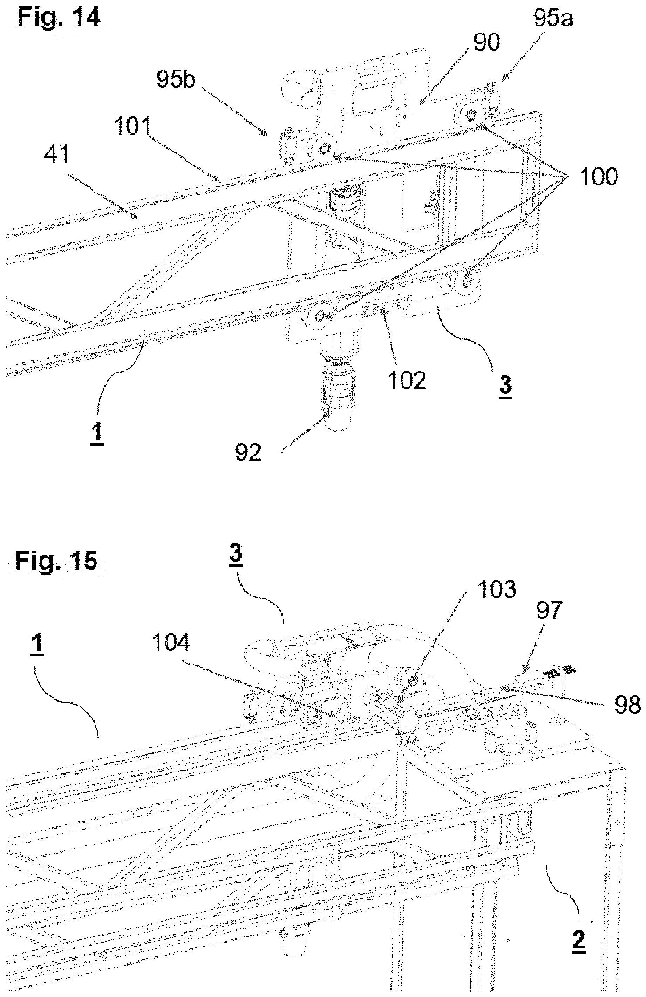

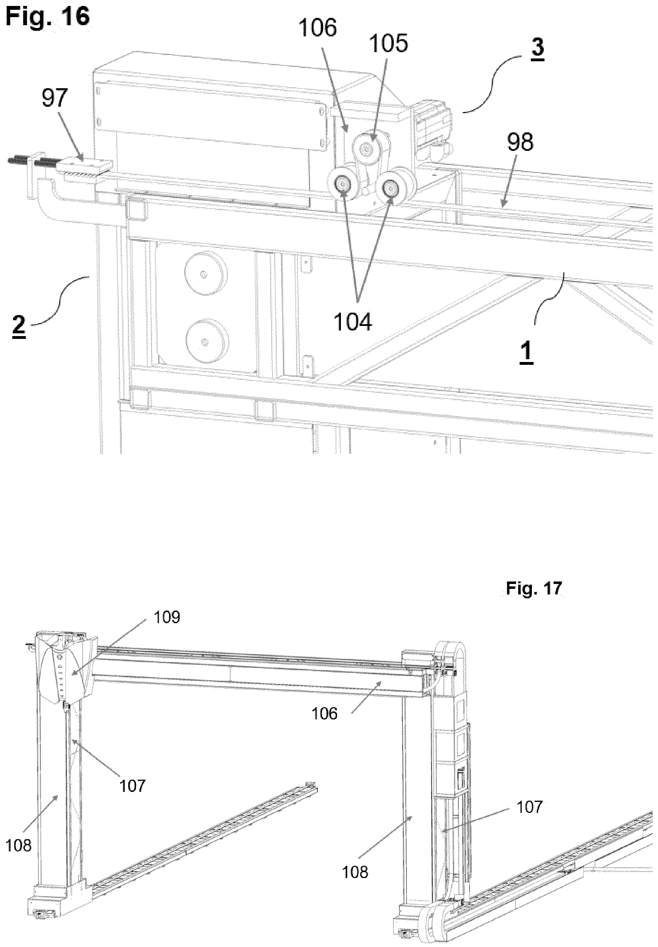

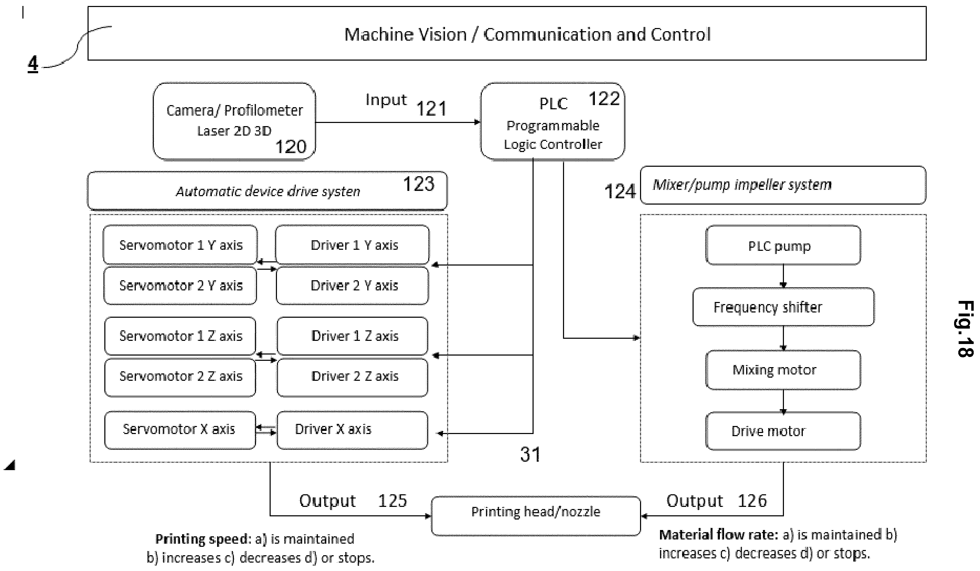

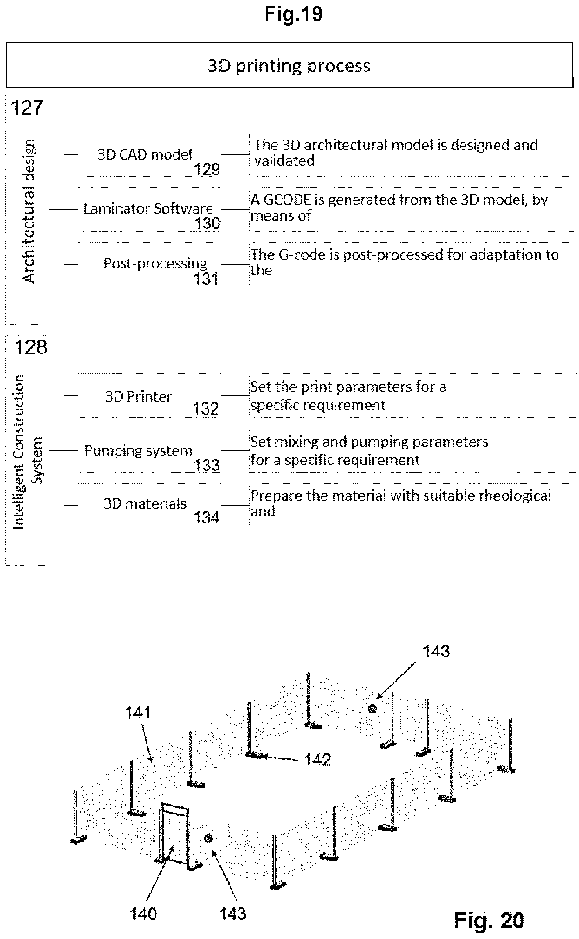

Fig. 1 shows a perspective view of the printing machine assembly forming part of the 3D printing and additive manufacturing construction system that is the subject of the presented invention. Fig. 2 is a plan view of the printing machine from Fig. 1. Fig. 3 is the S-S section represented in Fig. 2. Fig. 4 shows the motion assembly on the X axis and the hose ducting attached to the X axis. Fig. 5 shows the columns that make up the motion assembly on the Y-Z axes. Fig. 6 shows the details of the connection of the X axis with the movable columns. Figs. 7, 8 and 9 show the Y axis rail system and synchronous timing belt drive. Fig. 10 shows the details of the displacement elements on the Y-axis rails, together with the product hose and electrical wiring ducting. Fig. 11 shows the details of the Y axis column drive system. Fig.12 shows the details of the Z axis column drive system. Figs. 13, 14, 15 and 16 show the details of the printing head and its drive system on the X axis. Fig.17 shows the details of the internal moving parts protection system and the printing head housing. Fig.18 details the implemented functional scheme of the machine vision and artificial intelligence of the printing system. Fig. 19 shows the phases of the 3D printing process in schematic form. Finally, Fig. 20 shows the security device implemented in the system through a perimeter fence.

### Explanation of a detailed method to realise the invention

As has been indicated throughout the description, the presented invention relates to a system for intelligent 3D printing and additive manufacturing using a variety of cementitious materials and has the purpose of reproducing 3D models previously designed as a CAD model. The construction system is thus composed of a printing machine and a computer-implemented method that makes it possible to execute the automated extrusion of cementitious materials - preferably concrete - in layers according to a predefined digital model. In addition, the printer is equipped with an intelligent system to monitor the printing process and intervene if needed, both of which it can do autonomously.

The cementitious material, which in a particular non-limiting embodiment is fresh concrete or mortar, is thus pumped by an external pumping device into a printing head. Fresh concrete or mortar is extruded through a nozzle and placed according to a predefined layer pattern, and these layers are applied on top continuously until the desired geometry is printed.

Referring to the figures, the printing machine is configured as a structural mechanical system - preferably of steel construction - with a Cartesian configuration (X-Y-Z axes) that has a continuous and modular Y axis, in such a way that it makes it possible to adapt the printing range to constructions of varying dimensions using the same printer. It also includes a system of height-adjustable, width-adjustable rails (4) for levelling the printing area. The printing machine can be seen in detail in Figs. 1 to 3. Figure 1 shows the main parts of the printing machine, which comprise the central cabinet, referenced as 5, where all the electrical and electronic control components (the PLC, servo controllers, etc.) of the automatic device are housed. The X axis of the structural profile, referenced as 1 and made of steel, is also shown in detail in Figs. 13,14,15, and 16 and is where the printing head (3) slides. Other parts are the movable steel columns, referenced as 2 in the figures, which form the Z axis and shown in detail in figures 5, 11 and 12. Figs. 7, 8, 9 and 10 show the details of the construction system of the rails (4) that determine the Y axis displacement. Parallel to the structural profile (1) of the X axis and in the upper part of the columns, there is another steel structural axis (8) through which the electrical wiring of the installation runs, which is installed between the two vertical columns (2) that make up the Y-Z axis.

Figs. 4 and 13 show the assembly that facilitates movement along the X axis, which is formed by a structural profile section (41) of the X axis, along which the printing head (3) moves by means of a synchronous-transmission toothed belt (98), which is fastened at its ends via tensioners (97) to the structural profile (1) of the X axis. This assembly also incorporates the channelling elements for the hoses and electrical wiring of the machine (45) in such a way that movements along the different axes are made possible by means of an initial plastic chain assembly (43) on the Y axis, as well as a second plastic chain assembly (42) on the Z axis, maintaining the flow of material in a constant manner. The tray through which the product hoses will run will be placed on the structural profile (1) of the X axis.

The movable column assembly that facilitates movement along the Y-Z axes is shown in Figure.5. This assembly is composed of a base comprising a channel (56) with self-guiding support wheels on the rails (4) and enclosed on both sides by a pair of front and rear protective panels (57) and a pair of side protective panels (55). A welded structural profile column (54), equipped with a protective textile screen (50) and plastic side shields (49) to prevent direct contact with the guided roller drive system that moves the X axis mounting plate (52), so that the X axis structural profile (1) can move between two end points of the structure (54), generating the Z movement of the printing head (3).

For the assembly and adjustment of perpendicularity between the columns (54) (Z axis), the structural profile (1) (X axis) and the floor guides (Y axis), the mounting plate (52) employs a 2-bolt connection system with slot holes (53) that will allow the correct adjustment of parallelism between columns and perpendicularity with the floor guides. This detail may be observed in Fig. 6.

Movement along the Y axis is executed via the rails (4), which are modular profiles - preferably made of steel - that can be joined together to form a continuous leveling surface along which the columns (2) that make up the Y-Z assembly shown in Figs. 5 and 6 move synchronously. The clamping and tensioning brackets (62) are mounted at both ends of the guide, anchored to the same guide upon which is mounted a synchronous drive timing belt (58) for synchronized movement of the columns 2. The whole assembly can be levelled to absorb any deformation of the ground where the printer is installed.

Figures 7, 8 and 9 show the details of the Y axis synchronous belt 58. This belt requires a working tension provided by a pair of tensioners (62) located at the end of the rails.

Fig. 9 shows the anchoring and levelling system of the guides that will ensure the flatness of the assembly and the proper adjustment of the distance between columns. The maximum printing length on the Y axis is variable, it will be defined by the length of the rails and sections can be added or removed by connecting rails with screws (65). The flatness of the whole assembly is achieved by means of a double-locking screw system (63) that makes it possible to regulate and fix two plates (66) at a height; these plates are placed along the whole length of the guide. This height-adjustable double plate system (66) allows localised levelling of the rails in height, acting in a punctual manner on the different differences in height from the floor. Ground fastening and the adjustment of distance and parallelism between the rails is achieved by means of metal anchors (64) mounted on smooth holes and located along the rails.

Figs. 8 and 10 show the self-guiding wheel support guides of the assembly or columns shown in Fig. 5. The guide has a flat support profile (61) on which a metal wheel with bearings (68) rests and a rectangular profile (59) on which a U-shaped slotted wheel (67) is fitted. The physical limit switches or stops (60) will be mounted on this profile, located at the 4 ends of the rails and where the limit switches or position switches will act. The limit switches or position switches (72) are mounted on the carriage base; they are the sensors that act on the stops (60) fixed to the rails and detect the position of the moving assembly by means of this mechanical actuation of the Y axis. These limit switches are mounted on the X, Y and Z axes and allow the adjustment of the limits of the printing area of the machine along these axes. There are 4 limit switches on the Y axis (72), two units on the X axis (95) and another four on the Z axis (81).

Fig. 10 also shows the assembly comprising two plastic chains that allow the channelling for the product hoses (69), connected to the printing head and electrical wiring (71) of the machine (45) in such a way as to enable the free movement of the hoses (70) along the different axes as well as movement possibilities for the printing head. The chains will be placed on the floor on metal trays (82) with a guide function.

Figure 11 shows the details of the drive system for moving the set of columns (2) on the rails (4) in the Y axis. The assembly uses servomotors (75) with a 90° transmission that transmits motion to a gear (73) coupled to a synchronous timing belt (58) mounted on rails (4). The system uses two tension pulleys (74) that ensure the correct adjustment and synchronism of the movement generated by the motors. The system is located at the bottom of the movable columns (2) and is protected by the front protective panels (57) and the side protective panels (55).

Figure 12 shows the detail of the drive system for the displacement of the X axis structural profile assembly (1) on the columns (2 on the Z axis. The assembly uses servomotors (78) that transmit motion to a vertical spindle (77) via a toothed belt (79). This belt is monitored by a safety sensor (80) which detects belt breakage and would act in conjunction with the servomotor emergency brake (78) to prevent uncontrolled dropping of the X-axis (1). The entire assembly is internally guided with two ground steel columns (76). The assembly has two limit switches or position switches (81), which are fixed to the upper and lower parts of the column, upon which the inner part of the anchor plate to the X axis acts mechanically.

Figures 13, 14, 15 and 16 show the printing head (3) in detail. Specifically, the printing head (3) is mounted on a plate (90) that fixes the printing head to the structural profile (1) of the X axis by means of four self-guided wheels (100) that are encased in a metal profile (101) arranged on the metal frame 41. The fixing plate (90) is provided with a system for adjusting (102) the distance between the self-guiding wheels (100) to promote the correct movement of the assembly.

The drive system is at the rear of the printing head (3) and consists of a servomotor (103) mounted on a bracket (106) anchored to the printing head fixing plate (90). The movement of the head is accomplished by the actuation of the servomotor (103) which transmits the movement to a gear (105) coupled to the synchronous timing belt (58) mounted on the structural profile of the X axis (1). The system uses two tension pulleys (104) that ensure the correct adjustment and synchronism of the movement generated by the motor.

The spindle drive system, like the Y axis rails, has a synchronous timing belt (58) which is fastened and tensioned at its ends by means of special clamps (97).

The fixing plate (90) has two limit switches or position switches fixed on the left side (95a) and on the right side (95b) of the plate, which act mechanically on the stops (94) fixed to the two ends of the X axis.

At the front of the fixing plate (90), the printing head (3) comprises the final injection section, which is composed of an extrusion nozzle (92) which is configurable to different diameters, a shut-off valve (93) for opening and closing the passage of the material towards the extrusion nozzle, a connector (99) with the material hose (70), and lastly a pneumatic regulator (91) configured to operate the shut-off valve.

Fig. 18 shows the schematic of the machine vision and intelligence system implemented in the machine for inspection and control of the printing process; it is composed of several elements:
- An artificial intelligence programme or programmes, consisting of a set of instructions stored in memory and executable by a programmable logic controller (PLC)
- An optical image acquisition device or laser profilometer mounted on the fixture plate (90),
- Means of communication, recording and analysis,
- A programme or programmes composed of multiple instructions which, when executed by the programmable logic controller, enable a construction defect to be detected.

The machine vision and artificial intelligence system has cameras/profilometer (120) arranged on the printing head (4) in such a way that they generate and send an INPUT (121) which is sent to the PLC (122) continuously and in real time during printing. Through software and decision algorithms installed in the PLC, we can detect existing defects in the printing bead and detect defective surfaces, such as any lack or excess of material and any dimensional deficiencies of the bead. This system allows error detection, communication and autonomous decision-making in real time during printing. Using control algorithms, the PLC will act based on two basic printing parameters and generate two simultaneous and coordinated OUTPUTS during the printing process.

Firstly, a signal will be sent to the servomotor drivers and in turn to the servomotors themselves that control the automatic device drive system (123). The OUTPUT (125) will modify the speed of the printing head/nozzle (31) depending on the results of the algorithm and the images captured by the profilometer: it will maintain the speed if the result is correct, increase the speed if the bead width is above the maximum tolerances, reduce the speed if the bead width is below the minimum tolerances or stop in the event that a defect or discontinuity exceeds the maximum tolerances.

Secondly, a signal will be sent to the PLC of the material mixing and delivery pump (124). The OUTPUT (126) will use a frequency inverter to modify the power of the material mixing and discharge motors, modifying the nominal flow rate of the pumped material. Depending on the results of the algorithm and the images captured by the profilometer, different decisions will be taken: the drive speed (and therefore the flow rate) will be maintained if the result is correct, the speed will be increased if the width of the bead is below the minimum tolerances, the speed will be reduced if the width of the bead is above the maximum tolerances or stopped in the event that a defect or discontinuity exceeds the maximum tolerances.

The printing head and nozzle (31) will be subject at all times to changes in the speed of movement (mm/s) and flow rate (l/h) of the deposited material during printing, which will allow a high level of autonomy and print quality.

The correct implementation of the two OUTPUTS in a simultaneous and coordinated manner will be the basis of the system's artificial intelligence system. This system provides the equipment with advantages such as error correction during the printing process, quality optimisation, reduction of waste product and an effective, optimised printing process.

Furthermore, the printing head (3) is equipped with two IP cameras set up to allow viewing of the printing process, specifically the deposition of the bead from the extrusion nozzle (31) and from the top of the printer. Its function is to allow visual monitoring by the operator of the print quality, which is vital when the printing head (3) reaches a certain height where the operator does not have a direct view of the bead.

Figure 19 shows the printing process based on the implementation of new architectural-constructive designs with the additive manufacturing intelligent construction system which forms the object of this invention. The process begins with the creation of an architectural design (127) that will be translated into a 3D CAD model (129) which will include the specific requirements (habitability, resistance, among others) and will comply with a standardised construction code. These models must be validated by computer model testing prior to implementation.

The 3D model will be sent to an open source lamination software package (130) specific to additive manufacturing technologies, which will generate a G-CODE or code with the commands for execution by the 3D printer. Finally, prior to printing, the G-CODE must be post-processed (131) in order to adapt the construction solution orders to the peculiarities of our system.

Once the initial phase has been successfully completed we have a G-CODE that will be read and interpreted by the intelligent building system (128). The printing process starts with the configuration of specific parameters of the 3D printer equipment (132). Printing plans and parameters such as nozzle diameters, nozzle sections and hose diameters, etc. will be adjusted. Some parameters such as the printing nozzle diameter will define the bead width, nozzle printing speed, printing area length and layer height, among others.

Next, we must prepare the parameters of the pumping system (133) to ensure a constant flow of material during printing, such as selection of the pump stator and rotor that defines the flow, selection of the primary mixing shaft, impulsion blades, etc. In turn, the pumping system must be configured to achieve correct mixing and pumping to ensure the required flow at all times and thereby guarantee the quality and continuity of the printing. Other parameters of the pumping system are the type of material used, the amount of water in the mixture, selection of the mixing dosing shaft, selection of the rotor and drive stator, among others.

These parameters will ensure that the cementitious material is pumped through the pumping system that has been configured to perform the mixing of materials and impelled following the orders that are set in the G-CODE and are read by the PLC and executed by the printer. The deposition of the material will reach the extrusion nozzle (31) attached to the printing head (3). The material feeding system is connected through high pressure hoses to transport the materials to be applied. The hoses are in sections in order to extend the printing range and to allow easy cleaning,

Another essential factor in the system is the 3D material (134), which must have rheological and physical properties to guarantee the correct extrusion and the desired result of the construction solution.

A computer-implemented method configured to be executed within the construction system according to any of the herein examples is provided. The computer-implemented method comprises a process of referencing absolute and relative zero by manually moving the X, Y and Z axes.; a material loading process comprising an initial stage of lubrication of the hose system and a second stage of material delivery from the pump to the extrusion nozzle, including a stepwise reduction of water until the ideal rheology of the material is reached and extruded through the nozzle; a printing process in automatic mode comprising the loading of a digital file with a three-dimensional model capable of being printed by the printing machine; and a process of detecting existing defects in the print bead and detecting defective surfaces by means of machine vision and artificial intelligence means comprising at least one camera and/or a profilometer set up in the printing head and configured to generate and send an input signal to the programmable logic controller continuously and in real time during printing.

Additionally, automated processes, such as the purging and cleaning process, are implemented to avoid material blockages in the hoses with material purging processes through the extrusion nozzle (31), either after a pause in the printing process or if a preset maximum stop time has been exceeded. In this purging process, printing stops and the printing head (3) moves to the cleaning zone set aside for this purpose, where it begins to purge material. Once the purge process begins, the pumping system will purge the printing head (3) for a preset time. Finally, the printing head (3) is positioned at the last point where it stopped and resumes printing.

Finally, Fig. 20 shows the safety system implemented in the machine for accident prevention consisting of a perimeter fence comprising multiple metal panels (141), pedestals (142) and an access gate (140). The printing area through which the machine is moving is physically delimited in order to monitor and prevent involuntary uncontrolled access by any person, thus avoiding any situations of risk for any personnel outside the installation who are not working with the machine while it is in motion. In the event that the safety door is opened, the system is equipped with a magnetic detection sensor connected to the Programmable Logic Controller or PLC 5 which will cause the printing machine to automatically enter a safe state, limiting its maximum speed and acceleration along all its axes to a set safe speed and acceleration. In addition, the fence has mushroom-type emergency stop buttons (143) located at both ends, allowing an operator within the printing area to stop the machine at any time.

## Claims

1. An intelligent construction system using 3D printing and additive manufacturing comprising:
a printing machine comprising:
- a printing head (3) having an extrusion nozzle (92), and
- a programmable logic controller (5),
wherein the printing machine is connected to an external pumping device configured to feed the printing head (3) with fresh concrete or mortar to be extruded through the extrusion nozzle (92) according to a predefined layer pattern in a digital file executable by the programmable logic controller (5) of the printing machine;
where the printing machine is configured to continuously apply the layers of the predefined pattern until the geometry configured in the digital file is printed,
and where the printing machine comprises a self-supporting structure configured as a mechanical system with a Cartesian configuration (X-Y-Z), wherein the printing machine comprises:
a X axis structural profile (1) made of steel, wherein the printing head (3) is configured to slide across the X axis structural profile (1);
movable steel columns (2) which form the Z axis, wherein the movable steel columns (2) are connected to the X axis structural profile (1);
wherein the system also comprises:
machine vision and artificial intelligence resources comprising at least one camera and/or a profilometer (120) arranged on the printing head (3) configured to generate and send an input signal to the programmable logic controller (5) continuously and in real time during printing; and
wherein the programmable logic controller comprises a programme or programmes configured to detect existing defects in the print bead and detect defective surfaces,
**characterized in that** the printing machine further comprises:
a continuous and modular Y axis, configured to adapt the printing range to constructions of different dimensions using the same printing head (3), wherein the movement along the Y axis is defined via rails (4), wherein the rails (4) are modular profiles joined together, and wherein the rails are height-adjustable and width-adjustable for levelling the printing area so as form a continuous levellable surface over which the columns (2) move synchronously.

2. The construction system according to claim 1 comprising an assembly configured to facilitate movement on the X axis, the assembly comprising:
- a X axis structural profile section (41), wherein the printing head (3) is configured to move on the of the X axis structural profile section (41); and
- synchronous drive belt (98) to move the printing head (3) on the X axis structural profile section (41), wherein the synchronous drive belt (98) comprises two ends attached to the X axis structural profile (1).

3. The construction system according to claim 2 wherein the assembly for facilitating movement in the X axis comprises channelling elements (45) for the hoses and electrical wiring of the printing machine, such that movements in the different axes are made possible by an initial chain assembly (43) in the Y axis as well as a second chain assembly (42) in the Z axis, maintaining a constant material flow.

4. The construction system according to any one of the preceding claims comprising an assembly configured to facilitate movement along the Y-Z axes, comprising a base comprising a channel (56) with self-guiding support wheels arranged on the rails and enclosed on both sides by a front panel (57) and a side panel (55).

5. The construction system according to claim 4 wherein the assembly is configured to facilitate movement in the Y-Z axes, wherein on the base a column (54) fitted with a protective screen (50) is provided, wherein the column (54) is structured as a guide for an X axis mounting plate (52), such that the X axis structural profile (1) can move between two end points of the structure, generating the Z axis movement of the printing head (3).

6. The construction system according to any one of the preceding claims wherein the columns (2) comprises an assembly configured to facilitate movement along the Y-Z axes.

7. The construction system according to claim 6 wherein at both ends of the guideway are mounted the clamping brackets (62) anchored to the same guideway, and on which is mounted a toothed belt drive (58) for the synchronised movement of the columns (2), and wherein the whole assembly can be levelled to absorb any deformation of the ground where it is mounted.

8. The construction system according to any one of the preceding claims wherein the printing head (3) is mounted on a printing head attachment plate (90) to the X axis structural profile (1) by means of self-guiding wheels (100), and wherein at the rear of the printing head (3) the drive system is set up using a synchronous toothed belt drive (58) configured for the displacement thereof with respect to the X axis.

9. The construction system according to claim 8 wherein on the front side of the printing head attachment plate (90), the printing head (3) comprises injection resources which comprise the extrusion nozzle (92), a pneumatic shut-off valve (93) for opening and closing the material passage to the extrusion nozzle, a connector (99) with the material hose and finally IP cameras for monitoring and controlling the quality of the material deposited by the extrusion nozzle.

10. The construction system according to any one of the preceding claims wherein the printing head (3) comprises machine vision and artificial intelligence equipment in addition to cameras configured to monitor and control the printing process, specifically the quality of the bead deposition from the extrusion nozzle.

11. The construction system according to any one of the preceding claims comprising a security system comprising a perimeter fence, formed by multiple removable panels (141) with an access gate (140), for physically enclosing the secure working perimeter through which the printing machine is moving.

12. A computer-implemented method configured to be executed within the construction system according to any one of claims 1 to 11 comprising:
a process of referencing absolute and relative zero by manually moving the X, Y and Z axes.
a material loading process comprising an initial stage of lubrication of the hose system and a second stage of material delivery from the pump to the extrusion nozzle, including a stepwise reduction of water until the ideal rheology of the material is reached and extruded through the nozzle;
a printing process in automatic mode comprising the loading of a digital file with a three-dimensional model capable of being printed by the printing machine; and
comprising a process of detecting existing defects in the print bead and detecting defective surfaces by means of machine vision and artificial intelligence means comprising at least one camera and/or a profilometer set up in the printing head and configured to generate and send an input signal to the programmable logic controller continuously and in real time during printing.

13. The method according to claim 12 comprising a process of purging the material from the extrusion nozzle either manually or after a pause in the printing process when a preset maximum stop time has been exceeded.

14. The method according to claim 13 wherein in the process of purging material, printing is stopped and the printing head moves to the area established for such a purpose where it begins to purge; and wherein once the purging process begins, the pumping system will purge material through the printing head into a special container for a preset time; and wherein once purged, the printing head will return to the last point where it stopped and resume printing.

## Patentansprüche

1. Ein intelligentes Bausystem, das 3D-Druck und additive Fertigung verwendet, umfassend:
eine Druckmaschine, umfassend:
- einen Druckkopf (3) mit einer Extrusionsdüse (92) und
- eine speicherprogrammierbare Steuerung (5),
wobei die Druckmaschine mit einer externen Pumpvorrichtung verbunden ist, die konfiguriert ist, um den Druckkopf (3) mit frischem Beton oder Mörtel zu versorgen, der durch die Extrusionsdüse (92) gemäß einem vordefinierten Schichtmuster in einer digitalen Datei extrudiert werden soll, die durch die speicherprogrammierbare Steuerung (5) der Druckmaschine ausgeführt werden kann;
wobei die Druckmaschine dazu konfiguriert ist, die Schichten des vordefinierten Musters kontinuierlich aufzubringen, bis die in der digitalen Datei konfigurierte Geometrie gedruckt ist,
und wobei die Druckmaschine eine selbsttragende Struktur umfasst, die als ein mechanisches System mit einer kartesischen Konfiguration (X-Y-Z) konfiguriert ist, wobei die Druckmaschine Folgendes umfasst:
ein X-Achsen-Strukturprofil (1) aus Stahl, wobei der Druckkopf (3) konfiguriert ist, um über das X-Achsen-Strukturprofil (1) zu gleiten;
bewegliche Stahlsäulen (2), welche die Z-Achse bilden, wobei die beweglichen Stahlsäulen (2) mit dem X-Achsen-Strukturprofil (1) verbunden sind;
wobei das System auch Folgendes umfasst:
Mittel zum maschinellen Sehen und künstlicher Intelligenz, die mindestens eine Kamera und/oder ein Profilometer (120) umfassen, die/das an dem Druckkopf (3) angeordnet ist/sind und konfiguriert ist/sind, um während des Druckens kontinuierlich und in Echtzeit ein Eingangssignal zu erzeugen an die speicherprogrammierbare Steuerung (5) zu senden; und wobei die speicherprogrammierbare Steuerung ein Programm oder Programme umfasst, das/die konfiguriert ist/sind, um vorhandene Defekte in der Druckraupe zu erkennen und defekte Oberflächen zu erkennen,
**dadurch gekennzeichnet, dass** die Druckmaschine weiterhin Folgendes umfasst:
eine durchgehende und modulare Y-Achse, die konfiguriert ist, um den Druckbereich an Konstruktionen unterschiedlicher Abmessungen unter Verwendung des gleichen Druckkopfs (3) anzupassen, wobei die Bewegung entlang der Y-Achse über Schienen (4) definiert ist, wobei die Schienen (4) modulare Profile sind, die miteinander verbunden sind, und wobei die Schienen höhenverstellbar und breitenverstellbar sind, um den Druckbereich zu nivellieren, um eine durchgehende nivellierbare Oberfläche zu bilden, über die sich die Säulen (2) synchron bewegen.

2. Das Bausystem nach Anspruch 1, umfassend eine Anordnung, die konfiguriert ist, um eine Bewegung auf der X-Achse zu erleichtern, wobei die Anordnung Folgendes umfasst:
- einen X-Achsen-Strukturprofilabschnitt (41), wobei der Druckkopf (3) konfiguriert ist, um sich auf dem X-Achsen-Strukturprofilabschnitts (41) zu bewegen; und
- einen synchronen Antriebsriemen (98), um den Druckkopf (3) auf dem X-Achsen-Strukturprofilabschnitt (41) zu bewegen, wobei der synchrone Antriebsriemen (98) zwei Enden umfasst, die an dem X-Achsen-Strukturprofil (1) befestigt sind.

3. Das Bausystem nach Anspruch 2, wobei die Anordnung zur Erleichterung der Bewegung in der X-Achse Kanalelemente (45) für die Schläuche und die elektrische Verdrahtung der Druckmaschine umfasst, so dass Bewegungen in den verschiedenen Achsen durch eine anfängliche Kettenanordnung (43) in der Y-Achse sowie eine zweite Kettenanordnung (42) in der Z-Achse ermöglicht werden, wobei ein konstanter Materialfluss aufrechterhalten wird.

4. Das Bausystem nach einem der vorhergehenden Ansprüche, umfassend eine Anordnung, die konfiguriert ist, um eine Bewegung entlang der Y-Z-Achsen zu erleichtern, umfassend eine Basis, die einen Kanal (56) mit selbstführenden Stützrädern umfasst, die auf den Schienen angeordnet sind und auf beiden Seiten von einer Frontplatte (57) und einer Seitenplatte (55) umgeben sind.

5. Das Bausystem nach Anspruch 4, wobei die Anordnung dazu konfiguriert ist, die Bewegung in den Y-Z-Achsen zu erleichtern, wobei auf der Basis eine Säule (54) vorgesehen ist, die mit einem Schutzsieb (50) ausgestattet ist, wobei die Säule (54) als eine Führung für eine X-Achsen-Montageplatte (52) strukturiert ist, so dass sich das X-Achsen-Strukturprofil (1) zwischen zwei Endpunkten der Struktur bewegen kann, wodurch die Z-Achsen-Bewegung des Druckkopfs (3) erzeugt wird.

6. Das Bausystem nach einem der vorhergehenden Ansprüche, wobei die Säulen (2) eine Anordnung umfassen, die konfiguriert ist, um eine Bewegung entlang der Y-Z-Achsen zu erleichtern.

7. Das Bausystem nach Anspruch 6, wobei an beiden Enden der Führungsbahn die Klemmbügel (62) angebracht sind, die an der gleichen Führungsbahn verankert sind, und an denen ein Zahnriemenantrieb (58) für die synchronisierte Bewegung der Säulen (2) angebracht ist, und wobei die gesamte Anordnung nivelliert werden kann, um jede Verformung des Bodens, wo sie angebracht ist, aufzunehmen.

8. Das Bausystem nach einem der vorhergehenden Ansprüche, wobei der Druckkopf (3) auf einer Druckkopfbefestigungsplatte (90) an dem X-Achsen-Strukturprofil (1) mittels selbstführender Räder (100) montiert ist, und wobei an der Rückseite des Druckkopfs (3) das Antriebssystem unter Verwendung eines synchronen Zahnriemenantriebs (58) eingerichtet ist, der für seine Verschiebung in Bezug auf die X-Achse konfiguriert ist.

9. Das Bausystem nach Anspruch 8, wobei der Druckkopf (3) auf der Vorderseite der Druckkopfbefestigungsplatte (90) Einspritzressourcen umfasst, welche die Extrusionsdüse (92), ein pneumatisches Absperrventil (93) zum Öffnen und Schließen des Materialdurchgangs zur Extrusionsdüse, einen Anschluss (99) mit dem Materialschlauch und schließlich IP-Kameras zum Überwachen und Steuern der Qualität des durch die Extrusionsdüse abgelagerten Materials umfassen.

10. Das Bausystem nach einem der vorhergehenden Ansprüche, wobei der Druckkopf (3) zusätzlich zu Kameras, die konfiguriert sind, um den Druckprozess zu überwachen und zu steuern, insbesondere die Qualität der Raupeablagerung von der Extrusionsdüse, eine Ausrüstung für maschinelles Sehen und künstliche Intelligenz umfasst.

11. Das Bausystem nach einem der vorhergehenden Ansprüche umfassend ein Sicherheitssystem, das einen Umfangszaun umfasst, der aus mehreren abnehmbaren Platten (141) mit einem Zugangstor (140) besteht, um den sicheren Arbeitsumfang, durch den sich die Druckmaschine bewegt, physisch zu umschließen.

12. **Ein** Computerimplementiertes Verfahren, das dazu konfiguriert ist, innerhalb des Bausystems nach einem der Ansprüche 1 bis 11 ausgeführt zu werden, umfassend:
ein Verfahren zur Referenzierung von absolutem und relativem Nullpunkt durch manuelles Bewegen der X-, Y- und Z-Achse.
einen Materialbeladungsprozess, der eine Anfangsstufe der Schmierung des Schlauchsystems und eine zweite Stufe der Materialzufuhr von der Pumpe zur Extrusionsdüse umfasst, einschließlich einer schrittweisen Reduzierung von Wasser, bis die ideale Rheologie des Materials erreicht und durch die Düse extrudiert ist;
einen Druckprozess im automatischen Modus, umfassend das Laden einer digitalen Datei mit einem dreidimensionalen Modell, das von der Druckmaschine gedruckt werden kann; und
umfassend ein Verfahren zum Erkennen von vorhandenen Defekten in der Druckraupe und zum Erkennen von defekten Oberflächen anhand von Mitteln zum maschinellen Sehen und künstlicher Intelligenz umfassend mindestens eine Kamera und/oder ein Profilometer, die/das in dem Druckkopf angeordnet ist/sind und konfiguriert ist/sind, um ein Eingangssignal kontinuierlich und in Echtzeit während des Druckens zu erzeugen und an die speicherprogrammierbare Steuerung zu senden.

13. Das Verfahren nach Anspruch 12 umfassend einen Prozess des Spülens des Materials aus der Extrusionsdüse entweder manuell oder nach einer Pause im Druckprozess, wenn eine voreingestellte maximale Stoppzeit überschritten worden ist.

14. Das Verfahren nach Anspruch 13, wobei in dem Prozess des Spülens von Material das Drucken gestoppt wird und sich der Druckkopf zu dem Bereich bewegt, der für einen solchen Zweck eingerichtet ist, wo er zu spülen beginnt; und wobei, sobald der Spülprozess beginnt, das Pumpsystem Material durch den Druckkopf in einen speziellen Behälter für eine voreingestellte Zeit spült; und wobei, sobald es gespült ist, der Druckkopf zu dem letzten Punkt zurückkehrt, wo er gestoppt worden ist und das Drucken wieder aufnimmt.

## Revendications

1. Un système de construction intelligent moyennant impression 3D et fabrication additive comprenant :
une machine d'impression comprenant :
- une tête d'impression (3) ayant une buse d'extrusion (92), et
- un contrôleur logique programmable (5),
dans lequel la machine d'impression est connectée à un dispositif de pompage externe configuré pour alimenter la tête d'impression (3) en béton ou en mortier frais à extruder à travers la buse d'extrusion (92) selon un motif de couche prédéfini dans un fichier numérique exécutable par le contrôleur logique programmable (5) de la machine d'impression ;
où la machine d'impression est configurée pour appliquer en continu les couches du motif prédéfini jusqu'à ce que la géométrie configurée dans le fichier numérique soit imprimée,
et où la machine à imprimer comprend une structure autoportante configurée comme un système mécanique avec une configuration cartésienne (X-Y-Z), dans lequel la machine à imprimer comprend :
un profil structurel d'axe X (1) en acier, dans lequel la tête d'impression (3) est configurée pour coulisser à travers le profil structurel d'axe X (1) ;
des colonnes d'acier mobiles (2) qui forment l'axe Z, dans lequel les colonnes d'acier mobiles (2) sont connectées au profil structurel de l'axe X (1) ;
dans lequel le système comprend également :
des moyens de vision artificielle et d'intelligence artificielle comprenant au moins une caméra et/ou un profilomètre (120) agencés sur la tête d'impression (3) configurés pour générer et envoyer un signal d'entrée au contrôleur logique programmable (5) en continu et en temps réel pendant l'impression ; et dans lequel le contrôleur logique programmable comprend un programme ou des programmes configurés pour détecter les défauts existants dans le cordon d'impression et détecter les surfaces défectueuses,
**caractérisé en ce que** la machine d'impression comprend en outre :
un axe Y continu et modulaire, configuré pour adapter la plage d'impression à des constructions de différentes dimensions à l'aide de la même tête d'impression (3), dans lequel le mouvement le long de l'axe Y est défini par des rails (4), dans lequel les rails (4) sont des profils modulaires reliés entre eux, et dans lequel les rails sont réglables en hauteur et réglables en largeur pour niveler la zone d'impression de manière à former une surface nivelable continue sur laquelle les colonnes (2) se déplacent de manière synchrone.

2. Le système de construction selon la revendication 1, comprenant un ensemble configuré pour faciliter le mouvement sur l'axe X, l'ensemble comprenant :
- une section de profil structurel d'axe X (41), dans lequel la tête d'impression (3) est configurée pour se déplacer sur la section de profil structurel d'axe X (41) ; et
- une courroie d'entraînement synchrone (98) pour déplacer la tête d'impression (3) sur la section de profil structurel d'axe X (41), dans lequel la courroie d'entraînement synchrone (98) comprend deux extrémités fixées au profil structurel d'axe X (1).

3. Le système de construction selon la revendication 2, dans lequel l'ensemble pour faciliter le mouvement dans l'axe X comprend des éléments de canalisation (45) pour les tuyaux et le câblage électrique de la machine d'impression, de sorte que les mouvements dans les différents axes sont rendus possibles par un ensemble de chaîne initial (43) dans l'axe Y ainsi que par un second ensemble de chaîne (42) dans l'axe Z, maintenant un flux de matériau constant.

4. Le système de construction selon l'une quelconque des revendications précédentes comprenant un ensemble configuré pour faciliter le mouvement le long des axes Y-Z, comprenant une base comprenant un canal (56) avec des roues de support autoguidées agencées sur les rails et enfermées des deux côtés par un panneau avant (57) et un panneau latéral (55).

5. Le système de construction selon la revendication 4, dans lequel l'ensemble est configuré pour faciliter le mouvement dans les axes Y-Z, dans lequel sur la base est prévue une colonne (54) équipée d'un écran de protection (50), dans lequel la colonne (54) est structurée comme un guide pour une plaque de montage d'axe X (52), de sorte que le profil structurel d'axe X (1) peut se déplacer entre deux points d'extrémité de la structure, générant le mouvement d'axe Z de la tête d'impression (3).

6. Le système de construction selon l'une quelconque des revendications précédentes, dans lequel les colonnes (2) comprennent un ensemble configuré pour faciliter le mouvement le long des axes Y-Z.

7. Le système de construction selon la revendication 6, dans lequel aux deux extrémités de la voie de guidage sont montés les supports de serrage (62) ancrés à la même voie de guidage, et auxquels est fixé un entraînement à courroie dentée (58) pour le mouvement synchronisé des colonnes (2), et dans lequel l'ensemble dans sa totalité peut être nivelé pour absorber toute déformation du sol où il est monté.

8. Le système de construction selon l'une quelconque des revendications précédentes, dans lequel la tête d'impression (3) est montée sur une plaque de fixation de tête d'impression (90) au profil structurel d'axe X (1) au moyen de roues autoguidantes (100), et dans lequel à l'arrière de la tête d'impression (3), le système d'entraînement est configuré à l'aide d'un entraînement à courroie dentée synchrone (58) configuré pour le déplacement de celui-ci par rapport à l'axe X.

9. Le système de construction selon la revendication 8, dans lequel sur le côté avant de la plaque de fixation de la tête d'impression (90), la tête d'impression (3) comprend des moyens d'injection qui comprennent la buse d'extrusion (92), une vanne d'arrêt pneumatique (93) pour ouvrir et fermer le passage de matériau vers la buse d'extrusion, un connecteur (99) avec le tuyau de matériau et enfin des caméras IP pour surveiller et contrôler la qualité du matériau déposé par la buse d'extrusion.

10. Le système de construction selon l'une quelconque des revendications précédentes, dans lequel la tête d'impression (3) comprend un équipement de vision artificielle et d'intelligence artificielle en plus de caméras configurées pour surveiller et contrôler le processus d'impression, en particulier la qualité du dépôt de cordon à partir de la buse d'extrusion.

11. Le système de construction selon l'une quelconque des revendications précédentes comprenant un système de sécurité comprenant une clôture de périmètre, formée par de multiples panneaux amovibles (141) avec une porte d'accès (140), pour enfermer physiquement le périmètre de travail sécurisé à travers lequel la machine d'impression se déplace.

12. Un procédé mis en œuvre par ordinateur configuré pour être exécuté dans le système de construction selon l'une quelconque des revendications 1 à 11, comprenant :
un processus de référencement du zéro absolu et relatif en déplaçant manuellement les axes X, Y et Z.
un processus de chargement de matériau comprenant une première étape de lubrification du système de tuyau et une deuxième étape de distribution de matériau de la pompe à la buse d'extrusion, comprenant une réduction par étapes d'eau jusqu'à ce que la rhéologie idéale du matériau soit atteinte et extrudée à travers la buse ;
un processus d'impression en mode automatique comprenant le chargement d'un fichier numérique avec un modèle tridimensionnel capable d'être imprimé par la machine d'impression ; et
comprenant un processus de détection des défauts existants dans le cordon d'impression et de détection de surfaces défectueuses au moyen de moyens de vision artificielle et d'intelligence artificielle comprenant au moins une caméra et/ou un profilomètre mis en place dans la tête d'impression et configurés pour générer et envoyer un signal d'entrée au contrôleur logique programmable en continu et en temps réel pendant l'impression.

13. Le procédé selon la revendication 12, comprenant un processus de purge du matériau de la buse d'extrusion soit manuellement, soit après une pause dans le processus d'impression lorsqu'un temps d'arrêt maximal prédéfini a été dépassé.

14. Le procédé selon la revendication 13, dans lequel, dans le processus de purge du matériau, l'impression est arrêtée et la tête d'impression se déplace vers la zone établie à cet effet où elle commence à purger ; et dans lequel, une fois que le processus de purge commence, le système de pompage purgera le matériau à travers la tête d'impression dans un récipient spécial pendant un temps prédéfini ; et dans lequel, une fois purgé, la tête d'impression retournera au dernier point où elle s'est arrêtée et reprendra l'impression.
